(19) Europäisches Patentamt / European Patent Office / Office européen des brevets

(11) **EP 3 325 941 B1**

(12) **EUROPÄISCHE PATENTSCHRIFT**

(45) Veröffentlichungstag und Bekanntmachung des Hinweises auf die Patenterteilung:
**19.01.2022   Patentblatt 2022/03**

(21) Anmeldenummer: **16744338.1**

(22) Anmeldetag: **18.07.2016**

(51) Internationale Patentklassifikation (IPC):
**G01N 15/08** (2006.01)   **G01N 21/86** (2006.01)
**G01N 21/3559** (2014.01)   **G01J 3/28** (2006.01)

(52) Gemeinsame Patentklassifikation (CPC):
**G01N 15/08;** G01N 2015/0846

(86) Internationale Anmeldenummer:
**PCT/EP2016/067019**

(87) Internationale Veröffentlichungsnummer:
**WO 2017/013050 (26.01.2017 Gazette 2017/04)**

(54) **ANORDNUNG ZUR BESTIMMUNG DER PERMEATIONSRATE EINER PROBE**

ASSEMBLY FOR DETERMINING THE PERMEATION RATE OF A SAMPLE

DISPOSITIF POUR DÉTERMINER LE TAUX DE PERMÉATION D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2015   DE 102015213974**

(43) Veröffentlichungstag der Anmeldung:
**30.05.2018   Patentblatt 2018/22**

(73) Patentinhaber: **Fraunhofer-Gesellschaft zur Förderung der angewandten Forschung e.V.**
**80686 München (DE)**

(72) Erfinder:
• **WOLLMANN, Philipp**
  **01189 Dresden (DE)**
• **GRAEHLERT, Wulf**
  **01277 Dresden (DE)**
• **GRUBER, Florian**
  **01127 Dresden (DE)**

(74) Vertreter: **Pfenning, Meinig & Partner mbB Patent- und Rechtsanwälte**
**An der Frauenkirche 20**
**01067 Dresden (DE)**

(56) Entgegenhaltungen:
WO-A1-2012/041945     WO-A1-2014/163039
WO-A2-2010/019515     US-A- 5 381 228

**Beschreibung**

Die Erfindung betrifft eine Anordnung zur Bestimmung der Permeationsrate einer Probe für einen Permeaten. Bei dem Permeaten soll es sich insbesondere um Wasserdampf handeln. Es können aber auch Untersuchungen für Sauerstoff, Kohlendioxid oder Methan als Permeaten damit durchgeführt werden. Proben können dabei aus Barrierematerialien für die jeweiligen Permeaten gebildet sein.

Bisher ist es üblich, Permeationsraten in Vorrichtungen direkt, d.h. anhand der Messung des durch die Probe permeierten Gases oder Dampfes, zu bestimmen. Dabei wird eine jeweilige Probe zwischen zwei Kammern angeordnet. In einer Kammer ist ein zu untersuchender Permeat enthalten. In der anderen Kammer erfolgt eine zeitaufgelöste Detektion des durch die Probe permeierten Permeaten. Die Detektion erfolgt dabei unter Einsatz eines für den Permeaten hochempfindlichen Sensors. Neben coulometrischen Sensoren werden häufig auch Spektrometer, unter Nutzung bekannter Absorptionsbanden des jeweiligen Permeaten zur Quantifizierung des Permeaten genutzt. Daraus abgeleitet kann die Permeationsrate (water vapor transmission rate - WVTR in g/m$^2$/d) bestimmt werden.

Mit den bekannten Vorgehensweisen ist eine hinreichend hohe Bestimmungsgenauigkeit erreichbar. Da Barriereproben naturgemäß eine sehr gute Barrierewirkung aufweisen, ist für diese herkömmliche direkte Bestimmung aber ein erheblicher Zeitaufwand erforderlich. Eine Bestimmung kann dabei - je nach Barrierewirkung der Probe - mehrere Tage bis Wochen dauern.

So ist aus WO 2012/041945 A1 ein Verfahren zur Detektion der Permeation eines Fluids durch eine Schicht bekannt.

US 5 381 228 A betrifft eine schnelle Bestimmung der Permeationsrate von Sauerstoff durch einen dünnen Film auf einem Kunststoffbehälter.

Ein System zur Bestimmung der Wassertransmissionsrate eines Gasbarrierefilms ist aus WO 2014/163039 A1 bekannt.

Die Offenbarung von WO 2010/019515 A2 betrifft ein Hyperspectralimaging-System.

Es ist daher Aufgabe der Erfindung, Möglichkeiten für die Bestimmung von Permeationsraten an Proben anzugeben, die in deutlich verkürzter Zeit zu Ergebnissen mit ausreichender Genauigkeit führen und somit sogar für eine inline Messung in Barrierefertigungsprozessen einsetzbar sind.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die erfindungsgemäße Anordnung zur Bestimmung der Permationsrate einer Probe weist mehrere Detektoren auf, die zur ortsaufgelösten spektralen Analyse elektromagnetischer Strahlung innerhalb eines Wellenlängenintervalls ausgebildet sind. Diese Detektoren sind dazu in einer Reihen- oder einer Reihen- und Spaltenanordnung angeordnet. Die Detektoren sind mit einer elektronischen Auswerteeinheit verbunden und so angeordnet, dass von einer breitbandigen Strahlungsquelle emittierte elektromagnetische Strahlung entweder nach einer Reflexion an der Oberfläche der Probe oder einer auf der Probe ausgebildeten Schicht und/oder nach dem Durchstrahlen einer für die elektromagnetische Strahlung transparenten Probe auf die Detektoren auftrifft. Dabei erfolgt die Bestrahlung so, dass auf einer Fläche, von der die elektromagnetische Strahlung reflektiert oder durch die Fläche transmittiert wird, eine homogene Intensität der elektromagnetischen Strahlung eingehalten ist. Die jeweils gleichzeitig zu detektierende Fläche soll also mit homogener Intensität bestrahlt werden. Bei der breitbandigen Bestrahlung werden elektromagnetische Wellen, die innerhalb eines Wellenlängenintervalls liegen, auf die jeweilige Oberfläche der Probe gerichtet, die untersucht werden soll.

Die elektronische Auswerteeinheit ist so ausgebildet, dass die durch die Detektoren orts- und wellenlängenaufgelöst erfassten Messsignale innerhalb eines Wellenlängenintervalls einem bestimmten Wellenlängenbereich sowie innerhalb eines vorgebbaren Teilbereiches der Probenfläche einem einzelnen Ortspunkt jeweils zuordenbar sind.

Die Gesamtheit der an allen Ortspunkten der jeweiligen Probenfläche wellenlängenaufgelöst erfassten Intensitäten bildet eine dreidimensionale Datenstruktur, bestehend aus einer wellenlängenaufgelösten und zwei ortsaufgelösten Dimensionen, ab (Hypercube).

Danach soll für alle wellenlängenaufgelöst erfassten Messsignale des Teilbereiches eine Datenreduzierung durchführbar sein, bei der aussagekräftige Merkmale selektiert werden und der daraus resultierende Merkmalssatz unter Verwendung eines in einem elektronischen Speicher abgelegten Regressionsmodells, das anhand von Merkmalssätzen ermittelt wurde, die vorher an Proben ermittelt worden sind, deren Permeationsraten insbesondere die Wasserdampfdurchlässigkeiten mit einem anderen Messverfahren, das eine höhere Messgenauigkeit aufweist, ermittelt wurden, einem Regressionsverfahren unterzogen wird, wodurch eine Aussage über die Permeationsrate des betreffenden Teilbereiches der Probe ableitbar ist, wobei mindestens ein Teilbereich zur Bewertung der Permeationsrate der Probe herangezogen wird.

Eine mit dem erfindungsgemäßen Verfahren untersuchte Probe sollte zur gleichen Probenklasse, die einen vergleichbaren Aufbau oder Zusammensetzung aufweisen sollte, wie die vorab mit einem anderen Messverfahren mit höherer Messgenauigkeit untersucht worden sind, gehören.

Der funktionale Zusammenhang zwischen adäquat selektierten Merkmalssätzen von Proben und deren Permeationsraten, die mit einem anderen Messverfahren ermittelt wurden, kann beispielsweise mittels linearer oder nichtlinearer Regression, einem Partial-Least-Square-Algorithmus (PLS), einem neuronalen Netzwerk, einer Kombination von mindestens zwei dieser Verfahren oder anderen Regressionsverfahren (Regressionsmodell) bestimmt werden können.

In dem elektronischen Speicher sollte also das Regressionsmodell, das anhand der mit der erfindungsgemäßen Anordnung erfassten Datensätze von Proben, die der Datenreduktion und Merkmalsextraktion unterzogen wurden und deren - mit einem anderen Messverfahren ermittelten - Permeationsraten, erstellt wurde, enthalten sein. Anhand eines im elektronischen Speicher gespeicherten Regressionsmodells, kann aus den mit der erfindungsgemäßen Anordnung ermittelten Datensätzen die Permeationsrate einer vergleichbar untersuchten Probe der gleichen Probenklasse mit vergleichbarem Aufbau bestimmt werden.

Die elektronische Auswerteeinheit nimmt die Datenreduzierung und Merkmalsextraktion der mit der erfindungsgemäßen Anordnung ermittelten Datensätze vor. Dabei kann zunächst eine Auswertung der spektralen Informationen und anschließend der Ortsinformationen erfolgen. Möglich ist auch eine dazu umgekehrte Reihenfolge oder eine beliebige Kombination von mehr als zwei einzelnen Schritten zur Datenreduzierung und Merkmalsextraktion.

Die Datenreduzierung und Merkmalsextraktion kann mittels Hauptkomponentenanalyse (PCA), Parametrisierung von Texturinformationen, Mittelwertbildung und/oder Bestimmung der Standardabweichung und Kombinationen davon erfolgen.

Im Falle der Verwendung der Hauptkomponentenanalyse werden die n Intensitäten der Wellenlängen (Spektren) aller Ortspunkte durch eine Koordinatentransformation in ein neues orthogonales Koordinatensystem - dem Hauptkomponentenraum - überführt, in dem die ursprünglichen Daten maximale Varianz besitzen, und wobei n die Anzahl der gemessenen Wellenlängen repräsentiert.

Die Koordinatentransformation errechnet sich durch die Bestimmung der n Eigenvektoren (Hauptkomponenten) und der dazugehörigen n Eigenwerte der Covarianzmatrix des Datensatzes der gemessenen Teilfläche. Je größer der n-te Eigenwert ist, umso mehr beschreibt die entsprechende n-te Hauptkomponente die ursprünglich Varianz, d.h. der Eigenvektor mit dem größten Eigenwert ist die 1. Hauptkomponente des Datensatzes und beschreibt den Großteil der ursprünglichen Varianz des Datensatzes. Der Eigenvektor mit dem niedrigsten Eigenwert ist die n-te Hauptkomponente des Datensatzes und beschreibt keine relevanten Eigenschaften des Datensatzes. Es wird nur ein bestimmte Anzahl Hauptkomponenten berücksichtigt- oft die ersten drei bis sechs, die bereits eine hinreichende Beschreibung - beispielsweise > 95 % - der ursprünglichen Varianz des Datensatzes gewährleisten. Die Anzahl der zu berücksichtigenden Hauptkomponenten - und somit die Dimensionalität des Hauptkomponentenraumes - kann Kriterien-gestützt beispielsweise anhand des Anteils an der Gesamtvarianz oder eines Scree-Tests gewählt werden.

Die Koordinaten der Spektren im neu aufgespannten Hauptkomponentenraum sind die sogenannten Score-Werte (Punktzahl), welche hinreichend den entsprechenden Ortspunkt charakterisieren.

Mit der elektronischen Auswerteeinheit kann vorteilhaft die Datenreduktion und Merkmalsextraktion so erfolgen, dass die erfindungsgemäß erfassten Daten auf gleichem Wege wie die Daten der Proben, anhand derer bekannten Permeationsraten das Regressionsmodell erstellt wurde, ausgewertet werden. Anhand des erfindungsgemäß erfassten Datensatzes, der orts- und wellenlängenaufgelöst erfassten Intensitäten der elektromagnetischen Strahlung, wird anschließend unter Verwendung des Regressionsmodells die Permeationsrate der Probe bestimmt.

Bei der Auswertung der erfindungsgemäß erfassten Daten kann bevorzugt wie folgt vorgegangen werden:

Variante a) Mit einer Hauptkomponentenanalyse der spektralen Informationen aller Ortspunkte der Teilfläche werden bevorzugt die ersten sechs Hauptkomponenten einschließlich der Score-Werte ermittelt. Da die erfindungsgemäß erfassten Daten alle Ortspunkte einer untersuchten Fläche repräsentieren, kann die flächige Verteilung der Scorewerte pro Hauptkomponente angegeben werden. Die Quantifizierung der unterschiedlichen flächigen Verteilung der Scorewerte erfolgt dabei durch verschiedene statistische Parameter, die anhand aller Scorewerte einer Hauptkomponente der jeweiligen Teilfläche bestimmt werden. Insbesondere sind dies die Varianz, der Interquantilabstand oder die mittlere absolute Abweichung. Dieses Vorgehen kann für alle Hauptkomponenten angewendet werden. Die Bestimmung der Permeationsrate erfolgt durch die elektronische Auswerteeinheit auf Grundlage eines Regressionsmodells, wie z.B. ein Partial-Least-Square Regressionsmodell (PLS), wobei die Parameter ggf. einer weiteren vorherigen Merkmalsextraktion, bevorzugt über eine weitere Hauptkomponentenanalyse (PCA)- unterworfen wurden.

Das dabei verwendete Regressionsmodell (hier PLS) wurde vorher anhand von Proben der gleichen Probenklasse mit vergleichbarem Aufbau, deren Permeationsraten insbesondere die Wasserdampfdurchlässigkeiten mit einem anderen Messverfahren, das eine höhere Messgenauigkeit aufweist, bestimmt wurden, ermittelt, wobei alle Schritte der Merkmalsextraktion analog dem oben beschriebenen Verfahren durchgeführt wurden.

Variante b) Über eine Hauptkomponentenanalyse der spektralen Information aller erfassten Ortspunkte der jeweiligen untersuchten Teilfläche wird eine oder mehrere Hauptkomponente(n), insbesondere die Score-Werte der Ortspunkte pro Hauptkomponente berechnet, die über die Probe flächig verteilt angegeben werden können. Die Ortspunkte können dabei durch verschiedene Parameter der Scorewerte beschrieben werden, neben dem eigentlichen Wert auch insbesondere durch die dreifache Standardabweichung vom Mittelwert aller Scorewerte der jeweiligen Teilfläche. Weicht an einem Ortspunkt dieser Parameter um mehr als das Dreifache der Standardabweichung vom Mittelwert dieses Parameters aller Ortspunkte ab, wird er als Defekt klassifiziert. Liegt ein solcher Ortspunkt neben einem bereits als defekt klassifizierten Ortspunkt, können auf diese Weise Gruppen von als defekt klassifizierten Ortspunkten (Defektbereiche) bestimmt werden. Für die weitere Merkmalsextraktion und somit zur Bestimmung des Merkmals "Permeationsrate" werden die Defektbereiche in verschiedene Gruppen aufgeteilt, wobei die Gruppeneinteilung der erfindungsgemäß bestimmten Defektbereiche durch Bestimmung von Parametern erfolgen kann, die eine räumliche Information des Defektbereiches erbringen, insbesondere der Fläche, Ausdehnung in Richtung beider Ortskoordinaten, Mittelpunkt, Exzentrizität, Äquivalenz-Durchmesser, Umfangslänge, Ausfüllung der umhüllenden Polygonfläche, Verhältnis der Fläche zur umhüllenden konvexen Fläche. Mittels eines weiteren Klassifizierungsverfahrens, vorteilhaft einer Clusteranalyse können, die die Defekte beschreibenden Parametersätze bestimmten Defekttypen zugeordnet werden, wobei sich eine Einteilung in vier Defekttypen als vorteilhaft erwiesen hat. Aus der Anzahl der Defekte pro Defekttyp, die auf der Probe ermittelt werden, kann anhand eines Regressionsmodells, insbesondere eines linearen Regressionsmodells, die Permeationsrate der Teilfläche ermittelt werden. Das dabei verwendete Regressionsmodell wurde vorher anhand von Proben der gleichen Probenklasse mit vergleichbarem Aufbau, deren Permeationsraten insbesondere die Wasserdampfdurchlässigkeiten mit einem anderen Messverfahren, das eine höhere Messgenauigkeit aufweist, bestimmt wurden, ermittelt, wobei alle Schritte der Merkmalsextraktion analog dem oben beschriebenen Verfahren durchgeführt wurden.

Ein untersuchter Teilbereich sollte eine Größe im Bereich 500 $\mu$m × 500 $\mu$m bis 1500 $\mu$m × 1500 $\mu$m aufweisen. Es sollte eine Detektion mit einer Ortsauflösung im Bereich 0,5 $\mu$m bis 1,5 $\mu$m, bevorzugt bei 1 $\mu$m durchführbar sein.

In einer Reihe sollten dabei mindestens 30, bevorzugt mindestens 100 Detektoren angeordnet sein.

In einer Spalte sollten mindestens eine, bevorzugt mindestens 50 Detektoren angeordnet sein.

Eine erfindungsgemäße Anordnung kann eine HSI-Kamera mit geeigneten strahlungsformenden optischen Elementen und einer elektronischen Auswerteelektronik eingesetzt werden.

Die Bestrahlung der Fläche sollte mit mindestens einem Winkel im Bereich 0° bis < 90° in Bezug zur Normalen der Oberfläche der Probe erfolgen. Bei einer Durchstrahlung einer für die elektromagnetische Strahlung transparenten Probe sollte vorteilhaft der Winkel von zumindest nahezu 0° zur Probennormalen eingehalten sein, also die Strahlung möglichst senkrecht auf die Oberfläche der Probe gerichtet werden, um den reflektierten Anteil so klein als möglich zu halten. Die Bestrahlung und Detektion kann auch bei veränderlichem Einfallswinkel der elektromagnetischen Strahlung durchgeführt werden. Wie bereits zum Ausdruck gebracht, können dabei Einfallswinkel im Bereich 0° bis maximal 89° gewählt werden.

Die Detektion kann sich auch auf linear polarisierte elektromagnetische Strahlung beschränken. In diesem Fall kann eine vorteilhafte Ausrichtung einer oder mehrerer Polarisationsebene(n) vor oder/und nach der Probe gewählt werden.

Insbesondere bei Verwendung von Detektoren, die lediglich eine Linie simultan spektral und ortsaufgelöst messen können, können die Detektoren und die Probe entlang mindestens einer Achse relativ und dabei bevorzugt in einem vorteilhaften Abstand zueinander bewegt werden. So kann bei statisch fixierten Detektoren und Strahlungsquelle eine Probe entlang einer Achse bewegt werden. Dies kann mit einem entsprechend beweglichen Tisch, auf dem eine Probe angeordnet ist, die in eine x- und ggf. auch in eine y-Richtung bewegt werden kann, erreicht werden. Es ist aber auch die Abwicklung von Rolle zu Rolle möglich, wenn die Probe aus einem flexibel verformbaren Werkstoff, beispielsweise in Form einer Folie vorliegt.

An der Strahlungsquelle können die elektromagnetische Strahlung formende Elemente vorhanden sein. In einer einfachen Ausführung kann die Strahlungsquelle mit einem Mikroskop kombiniert sein. Es kann aber auch eine Strahlungsquelle in einem Hohlkörper angeordnet sein, aus dem die elektromagnetische Strahlung diffus austritt und auf die zu bestrahlende Fläche gerichtet werden kann. Der Hohlkörper kann eine Kugel oder Zylinder sein. Es sollte eine gleichzeitig zu detektierende Fläche homogen bestrahlt werden können. Bei einer Strahlungsquelle mit strahlformenden optischen Elementen sollten bei der Auswahl der jeweils eingesetzten optischen Elemente, die zur Strahlformung dienen, der genutzte Wellenlängenbereich berücksichtigt werden.

Bevorzugt kann im Strahlengang der elektromagnetischen Strahlung eine den Einfall von gestreuter elektromagnetischer Strahlung vermeidende Blende vor den Detektoren angeordnet sein.

Von der Strahlungsquelle kann elektromagnetische Strahlung emittiert werden, deren Wellenlängenbereich im UV-Bereich beginnt und im IR-Bereich endet. Besonders bevorzugt ist Strahlung aus dem Wellenlängenbereich des sichtbaren Lichts bis in den NIR-Bereich also von 250 nm bis 1000 nm. Es sollten in einem genutzten Wellenlängenbereich für die Bestrahlung möglichst alle Wellenlängen innerhalb des jeweiligen Intervalls genutzt werden können. Die Grenzen sollten allein durch den Empfindlichkeitsbereich der eingesetzten Detektoren bezüglich ihrer Empfindlichkeit/Messgenauigkeit der mit Ihnen erfassbaren Intensitäten für die jeweiligen Wellenlängen und den optischen Eigenschaften der Strahlführungskomponenten vorgegeben sein. Bevorzugt sollten die Spektralbereiche verwendet werden, die die größte Varianz zwischen den Spektren der Proben des Ziel-WVTR-Bereichs aufweisen und einen möglichst kleinen Bestimmungsfehler aufweisen.

Es kann im Strahlengang auch mindestens ein Element, mit dem eine gezielte Wahl der Polarisation der elektromagnetischen Strahlung erreichbar ist, vorhanden oder darin integriert sein.

Eine Probe kann auch ein Mehrschichtaufbau, mehrerer bevorzugt aus unterschiedlichen Materialien oder Werkstoffen gebildeten Schichten, sein. Das Grundmaterial der Probe ist eine Polymerfolie oder eine dünne Metall- oder Glasfolie auf die weitere dünne Polymer-, Keramik- oder Metallschichten in verschiedener Kombination aufgebracht sein können.

Die eingesetzten Detektoren und die elektronische Auswerteeinheit sowie ggf. auch die Strahlungsquelle können ein so genanntes Hyperspektral-Image-System darstellen, das bei der erfindungsgemäßen Anordnung genutzt werden kann. Dadurch können neben den spektralen auch Ortsinformationen für den jeweils detektierten Teilbereich der Probe erhalten werden.

Vorteilhaft kann eine Reduzierung der Daten, die bei der Detektion an den einzelnen Ortspunkten ermittelten Intensitäten für die einzelnen Wellenlängen eines erfassten Wellenlängenbereichs (Spektrum) ermittelt wurden, bei der eigentlichen Auswertung sein. Dadurch kann eine für die Bestimmung der Permeationsrate relevante Information von der nicht relevanten abgetrennt werden, wodurch sich auch der elektronische Rechenaufwand erheblich reduziert und dadurch die erforderliche Zeit ebenfalls reduziert werden. Der Einsatz hochkomplexer, kostenintensiver elektronischer Rechentechnik ist nicht erforderlich.

Bei der Erfindung kann ein statistisches Modell erstellt werden, auf dessen Grundlage die Permeationsrate des untersuchten Probensystems im entsprechend zugrundeliegenden Teilbereich vorhergesagt werden kann. Dazu kann der Datensatz, der mit einem aus mehreren bevorzugt in Reihe angeordneten optischen Detektoren, mit denen eine wellenlängen- und ortsaufgelöste Erfassung von Intensitäten möglich ist, erfasst werden.

Der Wert der Permeationsrate wird durch Abweichungen vom Idealzustand der Probe beeinflusst. Diese Abweichungen können Fehlstellen, Partikel, Schichtdickenschwankungen, Materialänderungen etc. sein. Ebenso bewirken diese Artefakte, dass Licht, das mit der Probe wechselwirkt, unterschiedlich (spektral, Intensität) reflektiert, gestreut bzw. transmittiert wird. Die Gesamtheit einer hinreichenden Anzahl einzelner wellenlängenaufgelöst erfassten Intensitäten (Spektren) von unterschiedlichen Ortspunkten einer detektierten Teilfläche einer Probe kann somit die Information über die Permeationsrate im betrachteten Probenbereich repräsentieren.

Für die Bestimmung der Permeationsraten kann anhand eines gemessenen Merkmalssatzes unter Verwendung eines vorher mit an Proben der gleichen Probenklasse mit vergleichbarem Aufbau gemessenen Merkmalssätzen mit bekannten Permeationsraten aufgestellten Regressionsmodells die Permeationsrate bestimmt werden.

Die gemessenen Merkmalssätze sind dazu einer Datenreduktion und somit einer Merkmalsextraktion zu unterziehen. So können die an den einzelnen Ortspunkten der jeweiligen Teilfläche detektierten Wellenlängenspektren einer spektralen Merkmalsextraktion, beispielsweise einer Clusteranalyse oder Hauptkomponentenanalyse unterzogen werden. Die im Regressionsmodell verwendeten Parameter können demzufolge die Anzahl und Verteilung der Cluster, die Scorewerte der Hauptkomponenten oder deren Verteilung sein.

Weiterhin können zur Merkmalsextaktion Methoden der Bildkompression für eine Texturbewertung herangezogen werden, bei der die an allen Ortspunkten der jeweiligen Teilfläche detektierten Intensitäten einzelner Wellenlängen oder die der Summe bzw. der gemittelten Summe der Intensitäten mehrerer Wellenlängen oder die durch eine spektrale Merkmalsreduktion bestimmten Parameter und/oder deren Kombinationen einer Bildkompression unterzogen werden. Zur Beschreibung der Texturinformation des Datensatzes sollte dabei mindestens ein Parameter über eine Wavelet-Transformation oder eine anderweitige Bildkompressionsmethode, wie beispielsweise Taylor Polynome, Fourier- und Kosinus-Transformationen, Diskrete Kosinus Transformation oder Grauwert-Matrix-Methode ermittelt werden.

Auf Grundlage eines Kalibriermodells (Regressionsmodell), das anhand gemessener Datensätze von Proben der gleichen Probenklasse mit vergleichbarem Aufbau und bekannter Permeationsrate erstellt wurde, kann die Permeationsrate von Teilflächen vorhergesagt werden, wobei die jeweils gemessenen Datensätze zur Kalibrierung und zu Vorhersage unter Verwendung identischer Schritte der Merkmalsreduktion behandelt werden. Beispielhaft kann dabei als Regressionsmodell eine "Multiple Lineare Regressionsanalyse" (MLRA), eine "Hauptkomponenten-Regression" (PCR), eine "Partielle kleinste Quadrat Regression" (PLS) oder ein "Neuronales Netz" eingesetzt werden.

Voraussetzungen für eine ausreichende Bestimmungsgenauigkeit sind eine homogene Beleuchtung der zur Detektion genutzten Fläche, so dass eine Überlagerung der durch die Probe bedingten Intensitätsschwankungen mit lateralen Schwankungen der Beleuchtungsintensität durch Realisierungen eines lateral homogenen Lichtfelds vermieden werden kann. Für kleine Probenbereiche kann vorteilhaft eine Mikroskop-Optik eingesetzt werden. Die erfindungsgemäße Anordnung kann durch Einsatz unterschiedlicher Optiken, Arbeitsabstände und Vergrößerungen an die jeweilige zu detektierende Fläche der Probe angepasst werden.

Mit der Erfindung kann eine Bestimmung von Permeationsraten von Proben innerhalb weniger Millisekunden bis Minuten statt Tage bzw. Monaten durchgeführt werden. Es ist eine berührungslose Messung möglich. Die Proben müssen nicht zusätzlich behandelt oder anderweitig vorbereitet werden. Bevorzugt ist ein Einsatz in der Qualitätskontrolle und bei inline-Überwachungen der Produktion, so dass in diesen Fällen keine Probenentnahme und gesonderte Bestimmung erforderlich sind.

Die Erfindung kann vorteilhaft für die Bestimmung der Barriere- und Permeationseigenschaften von Hochbarrierematerialien eingesetzt werden. Diese finden insbesondere Anwendung in der Verpackungsindustrie, der Beschichtung von LCD-Panels/TFTs, der Einhausung/Kapselung von Dünnschicht-Solarzellen oder für eine sichere OLED-Verkapselung.

Nachfolgend soll die Erfindung beispielhaft näher erläutert werden.

Beispiel 1

Eine Probe aus einer Polyethylentherepthalat-Folie (Dicke von ca. 75 $\mu$m) die mit Zinn-Zink-Oxid mit einer Schichtdicke von ca. 150 nm beschichtet ist, wurde auf einer ausgewählten Fläche von 5 mm * 6 mm mit einer Halogenlampe als Lichtquelle, unter Verwendung eines optischen Mikroskops, homogen bestrahlt und in 30 Teilflächen eingeteilt. Oberhalb der Probe waren insgesamt 1000 x 50 optische Detektoren in einer Reihen-Spaltenanordnung angeordnet, so dass mit einer Breite von 5 mm die gesamte Probenfläche wellenlängen- und ortsaufgelöst erfasst werden konnte. Mit den optischen Detektoren wurden für einzelne Ortspunkte eine wellenlängenaufgelöste Erfassung der Intensitäten des von der Probe reflektierten Lichtes realisiert. Es wurden insgesamt 50 Wellenlängen im Bereich 400 nm bis 1000 nm berücksichtigt. Die Probe wurde dabei senkrecht zur Reihenanordnung der Detektoren bewegt, um die gesamte Probenfläche zu erfassen.

Die für die einzelnen Ortspunkte mit den Detektoren erfassten wellenlängenaufgelöst erfassten Intensitäten wurden zu Teilbereichen der Probe mit jeweils einer Größe von 1 mm $\times$ 1 mm entsprechend zugeordnet. Solche Teilbereiche mit zwei lateralen Dimensionen und einer spektralen Dimension kann man auch als Hypercube bezeichnen.

Anschließend erfolgte für den jeweiligen Teilbereich eine Datenreduzierung, bei der in Schritten, wie folgt beschrieben, vorgegangen worden ist:

1. Mittelwert-Glättung der Spektren Entfernung von Rauschen aus den gemessenen Spektren.
2. Hauptkomponentenanalyse des Hypercubes des Teilbereichs Dadurch wird eine Verringerung der Dimensionalität der Daten erreicht ohne, dass wichtige Informationen verloren gehen.
3. Berechnung der Varianz, des Interquantil-Abstands und der mittleren absoluten Abweichung der Eigenwerte jeder einzelnen Hauptkomponente. Das Ergebnis ist ein Satz verschiedener Merkmale.

Varianz ($\sigma^2$):

$$\sigma^2 = \frac{\sum_{i=1}^{n}(x_i - \bar{x})^2}{n-1}$$

Dabei sind $x_i$ = Eigenwert i $\dot{x}$ Mittelwert der Eigenwerte
Interquantil Abstand (IQR):

$$IQR = Q_{.75} - Q_{.25}$$

$Q_{75/.25}$ ... 75%- und 25%-Quantile
mittlere Absolute Abweichung (e):

$$e = \frac{1}{n}\sum_{i=1}^{n}|x_i - \bar{x}|.$$

n = Anzahl der Eigenwerte des Bildes

4. Anhand des vorab erstellten Regressionsmodells unter Verwendung von Datensätze von Teilflächen mit bekannten Permeationsraten und einer Datenbehandlung analog der in den Schritten 1 -4 beschriebenen, das im elektronischen Speicher der elektronischen Auswerteeinheit hinterlegt ist, erfolgte eine Bestimmung der Permeationsrate der untersuchten Probe.

**Patentansprüche**

1. Anordnung zur Bestimmung der Permeationsrate einer Probe für mindestens einen Permeaten, insbesondere Wasserdampf, bei der mehrere Detektoren, die zur ortsaufgelösten spektralen Analyse elektromagnetischer Strahlung innerhalb eines Wellenlängenintervalls ausgebildet sind, in einer Reihen oder einer Reihen- und Spaltenanordnung angeordnet und

   die Detektoren mit einer elektronischen Auswerteeinheit verbunden und so angeordnet sind, dass von einer breitbandigen Strahlungsquelle emittierte elektromagnetische Strahlung entweder nach einer Reflexion an der Oberfläche der Probe, einer auf der Probe ausgebildeten Schicht oder an der Oberfläche einer Schicht innerhalb der Probe und/oder nach dem Durchstrahlen einer für die elektromagnetische Strahlung transparenten Probe auf die Detektoren auftrifft, **dadurch gekennzeichnet, dass**

die Bestrahlung so erfolgt, dass auf einer Fläche, von der die elektromagnetische Strahlung reflektiert oder durch die Fläche transmittiert wird, eine lateral und zeitlich homogene Intensität der elektromagnetischen Strahlung eingehalten ist und

die elektronische Auswerteeinheit so ausgebildet ist, dass die orts- und wellenlängenaufgelöst erfassten Messsignale der Detektoren innerhalb eines Wellenlängenintervalls für einzelne Ortspunkte, die auf einer vorgebbaren Fläche der Probe angeordnet sind, erfasst und dabei an mehreren Positionen erfasste Messsignale jeweils einem Teilbereich der detektierten Fläche als Hypercube zugeordnet werden und

für alle wellenlängenaufgelöst erfassten Messsignale der Teilbereiche der detektierten Fläche eine Datenreduzierung durchgeführt wird, bei der aussagekräftige Merkmale selektiert werden und

anhand dieser selektierten Merkmale mit in einem elektronischen Speicher abgelegten vorab ermittelten Regressionsmodells, welches anhand der in analoger Weise erhaltenen Merkmalssätzen von Proben, deren Permeationsrate mit einem anderen Messverfahren, das eine höhere Messgenauigkeit aufweist, ermittelt worden sind, eine Aussage über eine dementsprechende Permeationsrate erreicht wird.

2. Anordnung nach Anspruch 1, **dadurch gekennzeichnet, dass** die elektronische Auswerteeinheit so ausgebildet ist, dass eine Datenreduzierung durch Merkmalsextraktion mittels Hauptkomponentenanalyse, Extraktion von Texturinformationen, Mittelwertbildung, Bestimmung der Standardabweichung und/oder Kombinationen davon erreicht wird.

3. Anordnung nach einem der vorhergehenden Ansprüche, **dadurch gekennzeichnet, dass** ein Teilbereich eine Größe im Bereich 500 μm * 500 μm bis 1500 μm * 1500 μm aufweist.

4. Anordnung nach einem der vorhergehenden Ansprüche, **dadurch gekennzeichnet, dass** die Bestrahlung der Fläche mit mindestens einem Winkel im Bereich 0 ° bis < 90° in Bezug zur Normalen der Oberfläche der Probe erfolgt.

5. Anordnung nach einem der vorhergehenden Ansprüche, **dadurch gekennzeichnet, dass** die Detektion und Auswertung unter Verwendung mindestens eines Polarisators mit mindestens einer definierten bekannten Polarisationsebene in Bezug zur Einfallsebene oder deren Kombinationen durchführbar ist.

6. Anordnung nach einem der vorhergehenden Ansprüche, **dadurch gekennzeichnet, dass** die Detektoren und die Probe entlang mindestens einer Achse relativ und dabei bevorzugt in einem konstanten Abstand zueinander bewegbar sind.

7. Anordnung nach einem der vorhergehenden Ansprüche, **dadurch gekennzeichnet, dass** die Strahlungsquelle die elektromagnetische Strahlung formende optische Elemente aufweist oder eine elektromagnetisehe Strahlung diffus auf die Fläche emittierende Strahlungsquelle, die insbesondere innerhalb eines Hohlkörpers angeordnet ist und besonders bevorzugt im Strahlengang der elektromagnetischen Strahlung eine, den Einfall von gestreuter elektromagnetischer Strahlung vermeidende Blende vor den Detektoren angeordnet ist.

8. Anordnung nach einem der vorhergehenden Ansprüche, **dadurch gekennzeichnet, dass** die Probe ein Mehrschichtaufbau, der bevorzugt mit mehreren aus unterschiedlichen Materialien oder Werkstoffen gebildeten Schichten gebildet ist.

9. Anordnung nach einem der vorhergehenden Ansprüche, **dadurch gekennzeichnet, dass** die Reihen- und Spaltenanordnung von Detektoren mit optischen Elementen und Auswerteelektronik mit einer HSI-Kamera gebildet ist.

## Claims

1. An arrangement for determining the permeation rate of a sample for at least one permeate, particularly water vapor, in which a plurality of detectors, which are designed for spatially resolved spectral analysis of electromagnetic radiation within a wavelength interval, are arranged in a row or a row and column arrangement and

the detectors are connected to an electronic evaluation unit and are arranged such that electromagnetic radiation emitted by a broadband radiation source impinges on the detectors either after a reflection on the surface of the sample, a layer formed on the sample or on the surface of a layer within the sample and/or after irradiating through a sample that is transparent to the electromagnetic radiation, **characterized in that**

the irradiation takes place such that a laterally and temporally homogeneous intensity of the electromagnetic radiation is maintained on a surface from which the electromagnetic radiation is reflected or transmitted through the surface, and

the electronic evaluation unit is designed such that the position-resolved and wavelength-resolved captured measurement signals of the detectors are captured within a wavelength interval for individual location points that are arranged on a predeterminable surface of the sample, and measurement signals captured at a plurality of positions are each assigned to a subregion of the detected surface as a hypercube and

a data reduction is carried out for all wavelength-resolved captured measurement signals of the subregions of the detected surface, in which data reduction meaningful features are selected and

a statement about a corresponding permeation rate is obtained on the basis of these selected features using previously determined regression models stored in an electronic memory, which regression models have been determined on the basis of sets of features obtained in an analogous manner from samples whose permeation rate has been determined using a different measuring method that has a higher measuring accuracy.

2. The arrangement according to claim 1, **characterized in that** the electronic evaluation unit is designed such that a data reduction is achieved through feature extraction by means of principal component analysis, extraction of texture information, averaging, determination of the standard deviation and/or combinations thereof.

3. The arrangement according to any one of the preceding claims, **characterized in that** a subregion has a size in the range 500 μm * 500 μm to 1500 μm * 1500 μm.

4. The arrangement according to any one of the preceding claims, **characterized in that** the surface is irradiated at at least one angle in the range 0° to < 90° in relation to the normal to the surface of the sample.

5. The arrangement according to any one of the preceding claims, **characterized in that** the detection and evaluation can be carried out using at least one polarizer with at least one defined known polarization plane in relation to the plane of incidence or combinations thereof.

6. The arrangement according to any one of the preceding claims, **characterized in that** the detectors and the sample can be moved relative to one another along at least one axis and preferably at a constant distance from one another.

7. The arrangement according to any one of the preceding claims, **characterized in that** the radiation source has the optical elements shaping the electromagnetic radiation or a radiation source emitting electromagnetic radiation diffusely on the surface, which radiation source is arranged particularly within a hollow body and particularly preferably a diaphragm which avoids the incidence of scattered electromagnetic radiation is arranged in front of the detectors in the beam path of the electromagnetic radiation.

8. The arrangement according to any one of the preceding claims, **characterized in that** the sample is a multi-layer structure, which is preferably formed with a plurality of layers formed from different materials or substances.

9. The arrangement according to any one of the preceding claims, **characterized in that** the row and column arrangement is formed by detectors with optical elements and evaluation electronics with an HSI camera.

**Revendications**

1. Dispositif destiné à déterminer le taux de perméation d'un échantillon pour au moins un perméat, en particulier la vapeur d'eau, dans lequel une pluralité de détecteurs servant à l'analyse spectrale à résolution spatiale d'un rayonnement électromagnétique dans un intervalle de longueur d'onde sont disposés en lignes ou en lignes et en colonnes, et

les détecteurs sont reliés à une unité de traitement électronique et agencés de telle sorte qu'un rayonnement électromagnétique émis par une source de rayonnement à large bande frappe les détecteurs après avoir été réfléchi sur la surface de l'échantillon, sur une couche formée sur l'échantillon ou sur la surface d'une couche contenue dans l'échantillon et/ou après avoir traversé un échantillon transparent pour le rayonnement électromagnétique, **caractérisé en ce que**

l'irradiation se déroule de telle sorte qu'une intensité du rayonnement électromagnétique reste homogène latéralement et temporellement sur une surface réfléchissant ou transmettant le rayonnement électromagnétique, et

l'unité de traitement électronique est conçue de telle sorte que les signaux de mesure des détecteurs, résolus dans l'espace et en longueur d'onde, sont captés dans un intervalle de longueur d'onde pour différents points locaux disposés sur une surface de l'échantillon pouvant être prédéfinie, des signaux de mesure captés en plusieurs points étant chacun associés à une zone partielle de la surface détectée sous forme d'hypercube, et

une réduction des données est effectuée pour tous les signaux de mesure résolus en longueur d'onde des zones partielles de la surface détectée, des caractéristiques significatives étant alors sélectionnées, et

à l'aide de ces caractéristiques sélectionnées avec un modèle de régression déterminé au préalable et stocké dans une mémoire électronique, lequel a été déterminé à l'aide d'ensembles de caractéristiques d'échantillons obtenus de manière analogue et dont le taux de perméation a été déterminé par un autre procédé de mesure à la précision plus élevée, on obtient une information sur un taux de perméation correspondant.

2. Dispositif selon la revendication 1, **caractérisé en ce que** l'unité de traitement électronique est conçue de telle sorte qu'une réduction des données est obtenue par extraction de caractéristiques au moyen d'une analyse en composantes principales, extraction d'informations de texture, calcul de moyenne, détermination de l'écart type et/ou leurs combinaisons.

3. Dispositif selon l'une des revendications précédentes, **caractérisé en ce qu'**une zone partielle présente une taille comprise entre 500 $\mu$m * 500 $\mu$m et 1500 $\mu$m * 1500 $\mu$m.

4. Dispositif selon l'une des revendications précédentes, **caractérisé en ce que** la surface est irradiée selon au moins un angle de 0° à < 90° par rapport à la normale de la surface de l'échantillon.

5. Dispositif selon l'une des revendications précédentes, **caractérisé en ce que** la détection et le traitement peuvent être réalisés à l'aide d'au moins un polariseur ayant au moins un plan de polarisation connu et défini par rapport au plan d'incidence ou des combinaisons de ceux-ci.

6. Dispositif selon l'une des revendications précédentes, **caractérisé en ce que** les détecteurs et l'échantillon sont mobiles l'un par rapport à l'autre le long d'au moins un axe, de préférence à une distance constante l'un de l'autre.

7. Dispositif selon l'une des revendications précédentes, **caractérisé en ce que** la source de rayonnement présente des éléments optiques structurant le rayonnement électromagnétique ou une source de rayonnement émettant un rayonnement électromagnétique diffus sur la surface est disposée de préférence à l'intérieur d'un corps creux et, en particulier, un diaphragme permettant d'éviter l'incidence d'un rayonnement électromagnétique dispersé est disposé devant les détecteurs sur la trajectoire du rayonnement électromagnétique.

8. Dispositif selon l'une des revendications précédentes, **caractérisé en ce que** l'échantillon est une structure multicouche, de préférence constituée de plusieurs couches composées de matières ou matériaux différents.

9. Dispositif selon l'une des revendications précédentes, **caractérisé en ce que** l'agencement en lignes et en colonnes de détecteurs comprenant des éléments optiques et un système électronique de traitement est formé d'une caméra HSI.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012041945 A1
- US 5381228 A
- WO 2014163039 A1
- WO 2010019515 A2